# EUROPEAN PATENT APPLICATION

(11) **EP 4 775 946 A1**
(43) Date of publication of application: **15.07.2026**
(21) Application number: 24954600.3
(22) Date of filing: 30.11.2024
(51) Int. Cl.: G01M 9/00, G01M 9/02, G01M 9/04

(54) **RESIDUAL GAS EJECTION-TYPE HIGH-ENTHALPY PURE INCOMING FLOW WIND TUNNEL TEST SYSTEM**

(30) Priority: 08.11.2024 CN 202411592413
(71) Applicant: Xi'an Aerospace Propulsion Test Technology Institute, Xi'an, Shaanxi 710100 (CN)
(72) Inventor: YU, Guanglei, Xi'an, Shaanxi 710100 (CN); AN, Chenglin, Xi'an, Shaanxi 710100 (CN); WANG, Yue, Xi'an, Shaanxi 710100 (CN); MA, Junde, Xi'an, Shaanxi 710100 (CN); WANG, Zhiwu, Xi'an, Shaanxi 710100 (CN); HE, Xiaojun, Xi'an, Shaanxi 710100 (CN); LING, Yun, Xi'an, Shaanxi 710100 (CN); WANG, Dong, Xi'an, Shaanxi 710100 (CN)
(74) Representative: WSL Patentanwälte Partnerschaft mbB
(86) International application number: PCT/CN2024/135980
(87) International publication number: WO 2026/097638

(57) **Abstract**

The present invention discloses a residual gas ejection-assisted high-enthalpy pure airflow wind tunnel test system, which primarily addresses technical issues such as a limited heating degree and a complex exhaust system in an existing wind tunnel test system. The system includes a gas generation unit, a heat transfer apparatus, a residual gas pipeline, a high-enthalpy air guiding unit, a test section, and a residual gas ejection unit. The gas generation unit is axially arranged at the center of an annular structure. The heat transfer apparatus is internally provided with a plurality of independent radial channels and axial channels. Two ends of each radial channel communicate with the gas generation unit and the residual gas pipeline respectively. Two ends of each axial channel communicate with an air inlet and the high-enthalpy air guiding unit respectively. An inlet of the test section is connected to the high-enthalpy air guiding unit, and an outlet of the test section converges with an outlet end of the residual gas pipeline and is connected to an inlet end of the residual gas ejection unit. The residual gas ejection unit is configured to eject and discharge residual gas and high-enthalpy air to an external environment.

## Description

### TECHNICAL FIELD

The present invention relates to a wind tunnel test system, in particular to a residual gas ejection-assisted high-enthalpy pure airflow wind tunnel test system.

### BACKGROUND

Currently, experimental research on high-speed aircrafts and their propulsion systems primarily relies on three approaches: wind tunnel testing, numerical simulation, and flight testing. Among these, wind tunnel testing serves as the foundational tool for the study and performance evaluation and validation of aircrafts and their propulsion systems, with high-enthalpy wind tunnel test systems being the primary solution today. A high-enthalpy wind tunnel test system consists of three main components: a driver module, a test section, and an exhaust module. The driver module primarily produces high-enthalpy and high-pressure gas, which is expanded and accelerated through a device's nozzle to replicate airflow required for testing. After passing through the test section, the replicated airflow is discharged via the exhaust module.

In the driver module, to obtain a high-enthalpy airflow that matches flight conditions, fuel is typically injected directly into the airflow for combustion heating to raise the temperature of the airflow. However, during combustion heating, it inevitably introduces combustion byproducts into the test gas, contaminating the test gas and causing certain discrepancies in physicochemical properties between the test airflow and real air. Currently, heating methods employed in high-enthalpy pure airflow wind tunnels mainly include regenerative heating and electric heating. However, both of the heating technologies face limitations to varying degrees in practical applications. The regenerative heating technology is mainly limited by finite heat storage capacity, preventing sustained airflow heating. The electric heating technology is constrained by power grid supply limitations.

Additionally, ejection type exhaust is the most commonly used exhaust method in the exhaust module of the high-enthalpy wind tunnels. An ejection type exhaust system typically uses high-temperature and high-pressure steam as an ejection gas source, necessitating separate establishment of relatively large-scale steam generation facilities. Meanwhile, steam production consumes a significant amount of heat, and the startup and operation processes of the steam generation facilities are relatively complex. These factors significantly reduce the operational efficiency of the wind tunnels.

In summary, there is an urgent need to design a high-enthalpy pure airflow wind tunnel test system to avoid or eliminate the drawbacks and limitations present in an existing high-enthalpy wind tunnel system.

### SUMMARY

Some embodiments of the present invention are to provide a residual gas ejection-assisted high-enthalpy pure airflow wind tunnel test system so as to address technical issues such as a limited heating degree and a relatively complex exhaust system in an existing wind tunnel test system.

In order to implement the above objective, the present invention provides the following technical solutions.

A residual gas ejection-assisted high-enthalpy pure airflow wind tunnel test system is characterized in that:
the system includes a gas generation unit, a heat transfer apparatus, a residual gas pipeline and a high-enthalpy air guiding unit connected to the heat transfer apparatus, as well as a test section and a residual gas ejection unit;
a radial section of the heat transfer apparatus is of an annular structure, and the gas generation unit is coaxially arranged on an axis of the annular structure and connected to the annular structure to produce high-temperature gas;
two axial ends of the heat transfer apparatus are provided with an air inlet and an air outlet respectively, a radial outer side of the heat transfer apparatus is provided with a residual gas outlet, and the heat transfer apparatus is internally provided with a plurality of independent radial channels and axial channels; two ends of each radial channel communicate with the gas generation unit and the residual gas outlet respectively, and an inlet end of the residual gas pipeline is connected to the residual gas outlet to convey the high-temperature gas; two ends of each axial channel communicate with the air inlet and an inlet end of the high-enthalpy air guiding unit respectively, and air enters the axial channel via the air inlet and exchanges heat with the high-temperature gas conveyed via the radial channel to produce high-enthalpy air;
an interior of the test section is configured for a high-enthalpy wind tunnel test, an inlet of the test section is connected to an outlet end of the high-enthalpy air guiding unit, and an outlet of the test section converges with an outlet end of the residual gas pipeline and is connected to an inlet end of the residual gas ejection unit; and the residual gas ejection unit is configured to eject and discharge residual gas conveyed via the residual gas pipeline and high-enthalpy air discharged by the test section to an external environment.

In an embodiment, the residual gas ejection unit includes a residual gas ejection nozzle and a diffuser, wherein an inlet end of the residual gas ejection nozzle is connected to the outlet of the test section and the outlet end of the residual gas pipeline to expand and accelerate mixed gas composed of the residual gas and the high-enthalpy air; and an inlet end of the diffuser is connected to an outlet end of the residual gas ejection nozzle, and the diffuser is configured to decelerate and boost the expanded and accelerated mixed gas and then discharge the mixed gas to the external environment.

In an embodiment, the high-enthalpy air guiding unit includes a guiding pipeline, a rectifying apparatus and a device nozzle which are arranged in sequence;
an inlet end of the guiding pipeline is of an annular structure and communicates with the air outlet of the heat transfer apparatus; an outlet end of the guiding pipeline converges to an inlet end of the rectifying apparatus and is connected to the rectifying apparatus; and an inlet end of the device nozzle is connected to an outlet end of the rectifying apparatus, and an outlet end of the device nozzle is connected to the inlet of the test section.

In an embodiment, a sealing compensation apparatus is arranged at a connection of the rectifying apparatus and the device nozzle, and configured to perform thermal expansion compensation on the connection.

In an embodiment, the gas generation unit includes a combustion chamber, an ignition apparatus and a water-cooled blind plate;
the combustion chamber is of a cylindrical structure, and is axially mounted at the center of the annular structure of the heat transfer apparatus;
the ignition apparatus and the water-cooled blind plate are mounted at two axial ends of the combustion chamber respectively; an oxidant inlet and a fuel inlet are arranged at an end of the combustion chamber close to the ignition apparatus in a radial direction, and the ignition apparatus is configured to enable an oxidant and fuel to be combusted in the combustion chamber and produce the high-temperature gas; a plurality of gas holes communicating with the radial channels are formed in a radial side wall of the combustion chamber ; and
the water-cooled blind plate is configured to block the combustion chamber.

In an embodiment, an inner ring face of the heat transfer apparatus and the side wall of the combustion chamber are of an integrated structure.

In an embodiment, an inlet air gathering apparatus is mounted at a front end of the air inlet of the heat transfer apparatus, and configured to gather air entering the heat transfer apparatus; and
an outlet air gathering apparatus is arranged on the air outlet of the heat transfer apparatus, and two ends of the outlet air gathering apparatus are connected to the air outlet and the guiding pipeline respectively to gather the high-enthalpy air.

In an embodiment, the residual gas pipeline includes a plurality of gas tubes connected in sequence, and a ripple compensator is mounted at a connection of every two adjacent gas tubes.

In an embodiment, the radial channels and the axial channels are circular channels or rectangular channels.

Compared with the prior art, the present invention has the following beneficial technical effects.
1. In the residual gas ejection-assisted high-enthalpy pure airflow wind tunnel test system of the present invention, the radial section of the heat transfer apparatus is of the annular structure, and the gas generation unit is arranged on an axis of the annular structure and connected to the annular structure. Meanwhile, the heat transfer apparatus is internally provided with the plurality of independent radial channels and axial channels, the high-temperature gas produced by the gas generation unit exchanges heat with the airflow entering the axial channels of the heat transfer apparatus through the radial channels so as to obtain the high-enthalpy air, then the high-enthalpy air enters the test section via the high-enthalpy air guiding unit to complete a wind tunnel test, while the residual gas and the tested high-enthalpy air are discharged to the external environment through the residual gas ejection unit. The system can not only purely heat the airflow, but also solve the problem of exhaust ejection in the prior art, which greatly improves the operational efficiency of wind tunnels and lowers the operating cost of the wind tunnels.
2. In the residual gas ejection-assisted high-enthalpy pure airflow wind tunnel test system of the present invention, the residual gas ejection unit includes the residual gas ejection nozzle and the diffuser. The residual gas ejection nozzle is configured to expand and accelerate the mixed gas composed of the residual gas and the high-enthalpy air, and the diffuser is configured to decelerate and boost the expanded and accelerated mixed gas and then discharge the mixed gas to the external environment. This approach achieves both effective use of remaining heat of the gas and a more efficient exhaust ejection process.
3. In the residual gas ejection-assisted high-enthalpy pure airflow wind tunnel test system of the present invention, the high-enthalpy air produced by the heat transfer apparatus is guided and rectified in sequence and then enters the test section via the device nozzle, and this ensures that the high-enthalpy air entering the test section meets the requirements of the wind tunnel test, thereby improving the accuracy of the test.
4. In the residual gas ejection-assisted high-enthalpy pure airflow wind tunnel test system of the present invention, the sealing compensation apparatus is arranged at the connection of the rectifying apparatus and the device nozzle, which improves the airtightness and safety of the system.
5. In the residual gas ejection-assisted high-enthalpy pure airflow wind tunnel test system of the present invention, the combustion chamber of the gas generation unit is provided with the oxidant inlet and the fuel inlet, so that continuous and stable supply of energy required in the heating process is achieved.
6. In the residual gas ejection-assisted high-enthalpy pure airflow wind tunnel test system of the present invention, the inner wall of the heat transfer apparatus and the radial side wall of the combustion chamber adopt the integrated structural design, which fully uses the airflow to thermally protect the combustion chamber, ensuring efficient utilization of heat.

### BRIEF DESCRIPTION OF THE DRAWINGS

FIG. 1 is a schematic structural diagram of an embodiment of a residual gas ejection-assisted high-enthalpy pure airflow wind tunnel test system of the present invention.
FIG. 2 is a schematic diagram of a connection structure between a gas generation unit and a heat transfer apparatus in an embodiment of a residual gas ejection-assisted high-enthalpy pure airflow wind tunnel test system of the present invention.
FIG. 3 is a schematic structural diagram of a heat transfer apparatus in an embodiment of a residual gas ejection-assisted high-enthalpy pure airflow wind tunnel test system of the present invention.

### Reference numerals:

1-gas generation unit, 2-heat transfer apparatus, 21-air inlet, 22-air outlet, 23-radial channel, 24-axial channel, 3-residual gas pipeline, 31-ripple compensator, 4-test section, 5-residual gas ejection nozzle, 6-diffuser, 7-guiding pipeline, 8-rectifying apparatus, 9-device nozzle, 10-sealing compensation apparatus, 11-combustion chamber, 12-ignition apparatus, 13-water-cooled blind plate, 14-oxidant inlet, 15-fuel inlet, 16-gas hole, 17-inlet air gathering apparatus, and 18-outlet air gathering apparatus.

### DETAILED DESCRIPTION OF THE EMBODIMENTS

In order to make the objectives, advantages, and features of the present invention clearer, the present invention is further described in detail below in combination with accompanying drawings and specific embodiments. Those skilled in the art should understand that these implementations are only used to explain the technical principles of the present invention and are not intended to limit the scope of protection of the present invention.

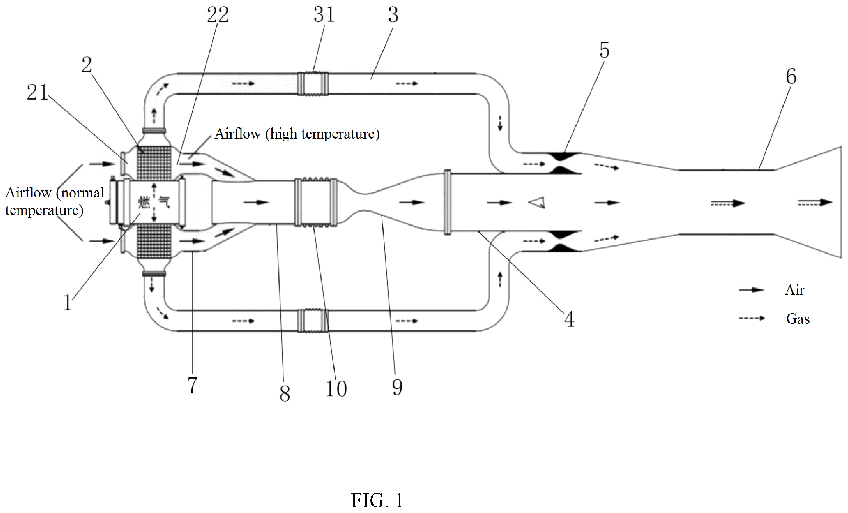

As shown in FIG. 1, the present embodiment provides a residual gas ejection-assisted high-enthalpy pure airflow wind tunnel test system. The system includes a gas generation unit 1, a heat transfer apparatus 2, a residual gas pipeline 3 and a high-enthalpy air guiding unit connected to the heat transfer apparatus 2, as well as a test section 4 and a residual gas ejection unit.

A radial section of the heat transfer apparatus 2 is of an annular structure, and the gas generation unit 1 is coaxially arranged on an axis of the annular structure and connected to the annular structure to produce high-temperature gas.

The gas generation unit 1 includes a combustion chamber 11, an ignition apparatus 12 and a water-cooled blind plate 13. The combustion chamber 11 is of a cylindrical structure, and is mounted on the axis of the annular structure.

The ignition apparatus 12 and the water-cooled blind plate 13 are mounted at two axial ends of the combustion chamber 11 respectively. An oxidant inlet 14 and a fuel inlet 15 are arranged at an end of the combustion chamber 11 close to the ignition apparatus 12 in a radial direction. The ignition apparatus 12 is configured to enable an oxidant and fuel to be combusted in the combustion chamber 11 and produce the high-temperature gas. The water-cooled blind plate 13 is configured to block the combustion chamber 11.

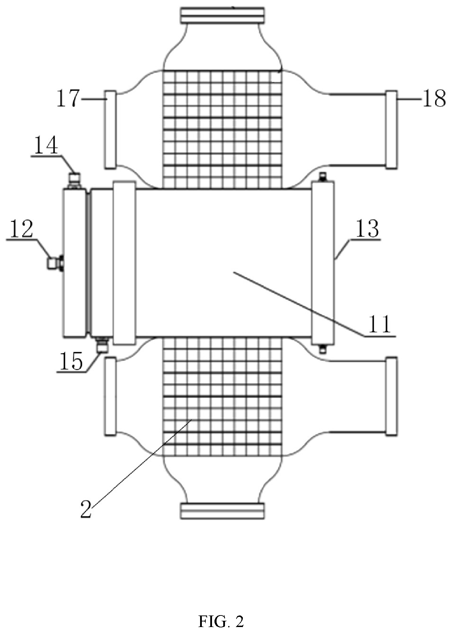

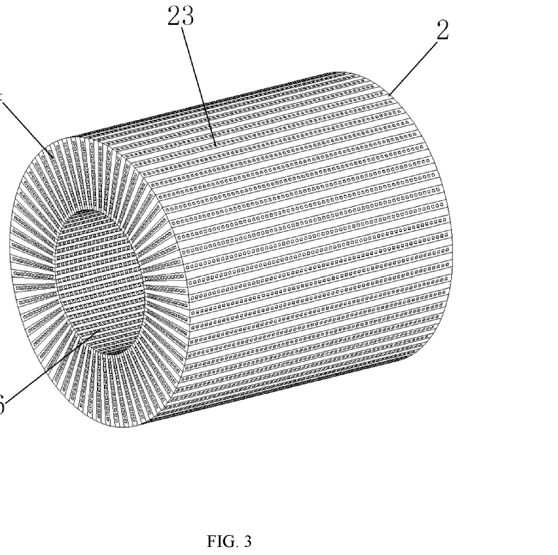

In combination with FIG. 2 and FIG. 3, two axial ends of the heat transfer apparatus 2 are provided with an air inlet 21 and an air outlet 22 respectively, a radial outer side of the heat transfer apparatus is provided with a residual gas outlet, and the heat transfer apparatus 2 is internally provided with a plurality of independent radial channels 23 and axial channels 24. Two ends of each radial channel 23 communicate with the gas generation unit 1 and the residual gas outlet respectively, and an inlet end of the residual gas pipeline 3 communicates with the residual gas outlet to convey the high-temperature gas. The radial channels 23 and the axial channels 24 are circular channels or rectangular channels, or designed as channels of other structures according to actual needs.

In the present embodiment, an inner ring face of the heat transfer apparatus 2 and a radial side wall of the combustion chamber 11 are of an integrated structure. A plurality of gas holes 16 communicating with the radial channels 23 are formed in the radial side wall of the combustion chamber 11.

Two ends of each axial channel 24 communicate with the air inlet 21 and an inlet end of the high-enthalpy air guiding unit respectively, air enters the axial channel 24 via the air inlet 21 and exchanges heat with the high-temperature gas conveyed via the radial channel 23 to produce high-enthalpy air, and then the high-enthalpy air enters the high-enthalpy air guiding unit.

The oxidant and the fuel medium enter the combustion chamber 11 through the oxidant inlet 14 and the fuel inlet 15 respectively, then undergo a combustion reaction through ignition of the ignition apparatus 12 and produce the high-temperature gas, and then the high-temperature gas enters the radial channels 23 via the gas holes 16. At the same time, airflow enters the axial channels 24 in the heat transfer apparatus 2 from the air inlet 21, and exchanges heat with the high-temperature gas, so that the airflow enters the high-enthalpy air guiding unit as the high-enthalpy air required by a wind tunnel test. Afterwards, since residual gas produced after heat exchange of the high-temperature gas still has a high temperature and pressure, the residual gas may flow out from the radial channels 23, pass through the residual gas pipeline 3 and then enter the residual gas ejection unit.

In some embodiments, an inlet air gathering apparatus 17 is mounted at a front end of the air inlet 21 of the heat transfer apparatus 2, and configured to gather air entering the heat transfer apparatus. An outlet air gathering apparatus 18 is arranged on the air outlet 22 of the heat transfer apparatus 2, and two ends of the outlet air gathering apparatus 18 are connected to the air outlet 22 and the guiding pipeline 7 respectively to gather the high-enthalpy air.

The residual gas pipeline 3 includes a plurality of gas tubes connected in sequence, and a high-temperature-resistant ripple compensator 31 is mounted at a connection of every two adjacent gas tubes and used for mounting of the residual gas pipeline 3 and compensation for high-temperature thermal expansion.

An interior of the test section 4 is configured for a high-enthalpy wind tunnel test, an inlet of the test section is connected to an outlet end of the high-enthalpy air guiding unit, and an outlet of the test section converges with an outlet end of the residual gas pipeline 3 and is connected to an inlet end of the residual gas ejection unit.

The high-enthalpy air guiding unit includes a guiding pipeline 7, a rectifying apparatus 8 and a device nozzle 9 which are arranged in sequence. An inlet end of the guiding pipeline 7 is of an annular structure and communicates with the air outlet 22; and an outlet end of the guiding pipeline 7 converges to an inlet end of the rectifying apparatus 8 and is connected to the rectifying apparatus 8. An inlet end of the device nozzle 9 is connected to an outlet end of the rectifying apparatus 8, and an outlet end of the device nozzle is connected to the inlet of the test section 4.

The high-enthalpy air is guided to the rectifying apparatus 8 by the guiding pipeline 7 to achieve converging and rectifying of the high-enthalpy airflow. The rectified high-enthalpy airflow is expanded and accelerated in the device nozzle 9 to replicate airflow required for testing, so that the replicated airflow enters the test section 4.

In order to improve the airtightness and safety of the system, in the present embodiment, a sealing compensation apparatus 10 is arranged at a connection of the rectifying apparatus 8 and the device nozzle 9, and configured to perform thermal expansion compensation on the connection.

The residual gas ejection unit is located at the tail of the test section 4, includes a residual gas ejection nozzle 5 and a diffuser 6, and is configured to eject and discharge the residual gas conveyed via the residual gas pipeline 3 and the high-enthalpy air discharged by the test section 4 to an external environment.

Specifically, an inlet end of the residual gas ejection nozzle 5 is connected to the outlet of the test section 4 and the outlet end of the residual gas pipeline 3 to expand and accelerate mixed gas composed of the residual gas and the high-enthalpy air. An inlet end of the diffuser 6 is connected to an outlet end of the residual gas ejection nozzle 5, and the diffuser is configured to decelerate and boost the expanded and accelerated mixed gas and then discharge the mixed gas to the external environment.

In the present invention, the gas generation unit 1 and the heat transfer apparatus 2 are made to communicate with each other, and the heat transfer apparatus 2 is used to achieve indirect heating of the airflow by the gas. During indirect heating, the gas and the airflow flow in respective independent flowing channels, so that the airflow is purely heated by the gas. The residual gas produced after heat exchange of the gas is guided to the residual gas ejection nozzle 5 located at the tail of the test section 4 through the residual gas pipeline 3, so that exhaust ejection of the airflow in the test section 4 is achieved. The secondary use of the high-temperature residual gas not only effectively solves the exhaust ejection problem of the wind tunnel system, but also sufficiently utilizes the remaining heat of the gas. Therefore, this method significantly improves the operational efficiency of wind tunnels and lowers the operating cost of the wind tunnels.

It should be noted at last that: the above embodiments are only used to illustrate the technical solutions of the present invention, not to limit them. Although the present invention has been described in detail with reference to the aforementioned embodiments, those ordinarily skilled in the art shall understand that: they can still modify the technical solutions recorded in the aforementioned embodiments or make equivalent replacements for part or all of the technical features; and these modifications or replacements do not separate the essence of the corresponding technical solutions from the scope of the technical solutions of the present invention.

## Claims

1. A residual gas ejection-assisted high-enthalpy pure airflow wind tunnel test system, **characterized by**:
comprising a gas generation unit (1), a heat transfer apparatus (2), a residual gas pipeline (3) and a high-enthalpy air guiding unit connected to the heat transfer apparatus (2), as well as a test section (4) and a residual gas ejection unit; wherein
a radial section of the heat transfer apparatus (2) is of an annular structure, and the gas generation unit (1) is coaxially arranged on an axis of the annular structure and connected to the annular structure to produce high-temperature gas;
two axial ends of the heat transfer apparatus (2) are provided with an air inlet (21) and an air outlet (22) respectively, a radial outer side of the heat transfer apparatus is provided with a residual gas outlet, and the heat transfer apparatus is internally provided with a plurality of independent radial channels (23) and axial channels (24); two ends of each radial channel (23) communicate with the gas generation unit (1) and the residual gas outlet respectively, and an inlet end of the residual gas pipeline (3) is connected to the residual gas outlet to convey the high-temperature gas; two ends of each axial channel (24) communicate with the air inlet (21) and an inlet end of the high-enthalpy air guiding unit respectively, and air enters the axial channel (24) via the air inlet (21) and exchanges heat with the high-temperature gas conveyed via the radial channel (23) to produce high-enthalpy air;
an interior of the test section (4) is configured for a high-enthalpy wind tunnel test, an inlet of the test section is connected to an outlet end of the high-enthalpy air guiding unit, and an outlet of the test section converges with an outlet end of the residual gas pipeline (3) and is connected to an inlet end of the residual gas ejection unit; and the residual gas ejection unit is configured to eject and discharge residual gas conveyed via the residual gas pipeline (3) and high-enthalpy air discharged by the test section (4) to an external environment.

2. The residual gas ejection-assisted high-enthalpy pure airflow wind tunnel test system according to claim 1, **characterized in that**:
the residual gas ejection unit comprises a residual gas ejection nozzle (5) and a diffuser (6), wherein an inlet end of the residual gas ejection nozzle (5) is connected to the outlet of the test section (4) and the outlet end of the residual gas pipeline (3) to expand and accelerate mixed gas composed of the residual gas and the high-enthalpy air; and an inlet end of the diffuser (6) is connected to an outlet end of the residual gas ejection nozzle (5), and the diffuser (6) is configured to decelerate and boost the expanded and accelerated mixed gas and then discharge the mixed gas to the external environment.

3. The residual gas ejection-assisted high-enthalpy pure airflow wind tunnel test system according to claim 1, **characterized in that**:
the high-enthalpy air guiding unit comprises a guiding pipeline (7), a rectifying apparatus (8) and a device nozzle (9) which are arranged in sequence;
an inlet end of the guiding pipeline (7) is of an annular structure and communicates with the air outlet (22) of the heat transfer apparatus (2); an outlet end of the guiding pipeline (7) converges to an inlet end of the rectifying apparatus (8) and is connected to the rectifying apparatus (8); and
an inlet end of the device nozzle (9) is connected to an outlet end of the rectifying apparatus (8), and an outlet end of the device nozzle is connected to the inlet of the test section (4).

4. The residual gas ejection-assisted high-enthalpy pure airflow wind tunnel test system according to claim 3, **characterized in that**:
a sealing compensation apparatus (10) is arranged at a connection of the rectifying apparatus (8) and the device nozzle (9), and configured to perform thermal expansion compensation on the connection.

5. The residual gas ejection-assisted high-enthalpy pure airflow wind tunnel test system according to any one of claims 1 to 4, **characterized in that**:
the gas generation unit (1) comprises a combustion chamber (11), an ignition apparatus (12) and a water-cooled blind plate (13);
the combustion chamber (11) is of a cylindrical structure, and is coaxially mounted on the axis of the annular structure;
the ignition apparatus (12) and the water-cooled blind plate (13) are mounted at two axial ends of the combustion chamber (11) respectively; an oxidant inlet (14) and a fuel inlet (15) are arranged at an end of the combustion chamber (11) close to the ignition apparatus (12) in a radial direction, and the ignition apparatus (12) is configured to enable an oxidant and fuel to be combusted in the combustion chamber (11) and produce the high-temperature gas; a plurality of gas holes (16) communicating with the radial channels (23) are formed in a radial side wall of the combustion chamber (11); and
the water-cooled blind plate (13) is configured to block the combustion chamber (11).

6. The residual gas ejection-assisted high-enthalpy pure airflow wind tunnel test system according to claim 5, **characterized in that**:
an inner ring face of the heat transfer apparatus (2) and the side wall of the combustion chamber (11) are of an integrated structure.

7. The residual gas ejection-assisted high-enthalpy pure airflow wind tunnel test system according to claim 6, **characterized in that**:
an inlet air gathering apparatus (17) is mounted at a front end of the air inlet (21) of the heat transfer apparatus (2), and configured to gather air entering the heat transfer apparatus; and
an outlet air gathering apparatus (18) is arranged on the air outlet (22) of the heat transfer apparatus (2), and two ends of the outlet air gathering apparatus (18) are connected to the air outlet (22) and the high-enthalpy air guiding unit respectively to gather the high-enthalpy air.

8. The residual gas ejection-assisted high-enthalpy pure airflow wind tunnel test system according to claim 1, **characterized in that**:
the residual gas pipeline (3) comprises a plurality of gas tubes connected in sequence, and a ripple compensator (31) is mounted at a connection of every two adjacent gas tubes.

9. The residual gas ejection-assisted high-enthalpy pure airflow wind tunnel test system according to claim 8, **characterized in that**:
the radial channels (23) and the axial channels (24) are circular channels or rectangular channels.
